# EUROPÄISCHE PATENTSCHRIFT

(11) **EP 1 405 422 B1**
(45) Veröffentlichungstag und Bekanntmachung des Hinweises auf die Patenterteilung: **06.09.2006**
(21) Anmeldenummer: 02754294.3
(22) Anmeldetag: 01.07.2002
(51) Int. Cl.: H04B 1/00, H04L 12/56

(54) **VERFAHREN ZUR OPTIMIERTEN NUTZUNG VON SCTP (STREAM CONTROL TRANSMISSION PROTOCOL) IN MPLS (MULTI PROTOCOL LABEL SWITCHING) NETZEN**
METHOD FOR THE OPTIMISED USE OF SCTP (STREAM CONTROL TRANSMISSION PROTOCOL) IN MPLS (MULTI PROTOCOL LABEL SWITCHING) NETWORKS
PROCEDE D'UTILISATION OPTIMALE DU SCTP (PROTOCOLE DE TRANSMISSION DE COMMANDE DE FLUX) DANS DES RESEAUX MPLS (COMMUTATION MULTIPROTOCOLE PAR ETIQUETTE)

(30) Priorität: 10.07.2001 DE 10133473
(43) Veröffentlichungstag der Anmeldung: 07.04.2004
(73) Patentinhaber: SIEMENS AKTIENGESELLSCHAFT, 80333 München (DE)
(72) Erfinder: TÜXEN, Michael, 81479 München (DE); GRIMMINGER, Jochen, 80638 München (DE)
(86) Internationale Anmeldenummer: PCT/DE2002/002381
(87) Internationale Veröffentlichungsnummer: WO 2003/007484

(56) Entgegenhaltungen:
- WO-A-00/36871
- SCHNEIDER H: "THE CONCEPT OF VIRTUAL PATHS AND VIRTUAL CHANNELS IN ATM-NETWORKS" ELECTRONIC CIRCUITS AND SYSTEMS FOR COMMUNICATION. ETH ZURICH, MAR. 5 - 8, 1990, PROCEEDINGS OF THE INTERNATIONAL ZURICH SEMINAR ON DIGITAL COMMUNICATIONS, ZURICH, INST. FOR QUANTUM ELECTRONICS, CH, 5. März 1990 (1990-03-05), Seiten 63-72, XP000315092
- LE FAUCHEUR F: "IETF Multiprotocol Label Switching (MPLS) Architecture" IEEE INTERNATIONAL CONFERENCE ON ATM, XX, XX, 22. Juni 1998 (1998-06-22), Seiten 6-15, XP002115225
- JUNGMAIER A ET AL: "DAS SIMPLE CONTROL TRANSMISSION PROTOCOL (SCTP) - EIN NEUES PROTOKOLL ZUM TRANSPORT VON SIGNALISIERUNGSMELDUNGEN UEBER IP-BASIERTE NETZE" ELEKTROTECHNIK UND INFORMATIONSTECHNIK, SPRINGER VERLAG, WIEN, AT, Bd. 117, Nr. 6, 2000, Seiten 381-388, XP001093493 ISSN: 0932-383X

## Beschreibung

SCTP [RFC 2960] ist ein Transportprotokoll, das hohe Netzwerkredundanz bietet, d. h. es wird sichergestellt, dass alle gesendeten Daten in der richtigen Reihenfolge ankommen. Dabei wird nicht nur ein möglicher Transportweg genutzt, wie z. B. bei TCP [RFC793] (realisiert durch IP [RFC 791]), sondern mehrere. Dies ist erforderlich bei Anwendungen, die eine sehr hohe Verfügbarkeit realisieren müssen, wie Signalisierungen in PSTN Netzen. Dabei wird als Netzwerkschicht IP verwendet. SCTP unterstützt IP durch geeignete (generische) Parameter in den Meldungen, die beim Verbindungsaufbau zwischen zwei Partnern ausgetauscht werden.
In heutigen "IP"-Core-Netzen, wie sie bei der drahtlose Kommunikation mit z.B. UMTS eingesetzt werden, wird immer häufiger auf reines IP verzichtet. Es werden vielmehr mit Hilfe von MPLS (Multi Protocol Label Switching [RFC 3031]) zwischen einzelnen Netzwerkelementen direkte LSPs (Label Switched Path) mit unter Einsatz von Traffic-Engineering aufgebaut. Bekannte Verfahren sind in den Dokumenten [RFC 2960] und [RFC 3031] offenbart.

Aus H.Schneider, "The concept of virtual paths and virtual channels in ATM-networks", Electronic Circuits and Systems for Communication, ETH Zürich, Mar.5-8,1990, Proc. International Zürich Seminar on Digital Communications, Zürich, Inst. for Quantum Electronics, CH, 5.3.1990, S.63-72, ist ein Verfahren zum Routing mittels virtuellen Kanälen bzw. virtuellen Pfaden in Breitband-Netzwerken auf der Basis von ATM (asynchronous transfer mode) bekannt. Bei der Verwendung dieser virtuellen Kanäle bzw. Pfade werden sog. Identifizierer VCI (= Virtual Channel Identifier) bzw. VPI (= Virtual Path Identifier) eingesetzt. Diese VCI- bzw. VPI-Werte dienen zum Weiterleiten der Informationen.

Aufgabe der vorliegenden Erfindung ist es, SCTP optimiert in MPLS Netzen zu verwenden.

Gelöst wird dies durch die Merkmale der unabhängigen Ansprüche, insbesondere durch ein Verfahren zur Übertragung von Informationen über ein Netzwerk zwischen zwei Entities mit einem ersten Protokoll, das MPLS ist und das zur Übertragung von Informationen zwischen den Entities Netzwerkpfade verwendet, die durch Labels, die jeweils zur Repräsentation einer FEC (= Forward Equivalence Class) in MPLS dienen, gekennzeichnet sind, wobei ein Ziel-Entity und ein Quell-Entity der Netzwerkpfade mit einem Label eindeutig bestimmt sind und das Label eindeutig einem Netzwerkpfad zugeordnet ist.

Dieses erste Protokoll dient lediglich dazu, die Informationen zum Ziel-Entity zu routen. Es übernimmt nicht die Aufgabe zu überprüfen, ob die Informationen auch tatsächlich angekommen sind. Hierfür ist ein zweites Transportprotokoll notwendig.

Das zweite Transportprotokoll, das auf dem ersten Protokoll aufbaut, bestätigt den Empfang einer Information durch eine Bestätigungsinformation, die an die Quell-Entity zurückgesandt wird. Das Verfahren der vorliegenden Erfindung soll nicht nur einen Pfad zur Übertragung von Informationen bereitstellen, sondern mehrere Pfade. Diese müssen bei einem Aufbau der Kommunikation übermittelt werden.
In einem ersten Init-Schritt werden über einen ersten Netzwerkpfad 1 bis n Labels von weiteren Netzwerkpfaden ausgetauscht. Jeder dieser Netzwerkpfade erlaubt einen eindeutigen Informationsaustausch zwischen den Entities. Nachdem die Netzwerkpfade ausgetauscht wurden, über die die Kommunikation und der Informationsaustausch stattfinden soll, werden die zu übertragenen Informationen über die 1 bis n Netzwerkpfade übermittelt. Je nach Lastsituation oder Antwortverhalten auf den einzelnen Netzwerkpfaden können die zu übertragenen Informationen auf weniger belastete Netzwerkpfade verteilt werden.
Zur Vermeidung von Kollisionen und zur Erhöhung des Durchsatzes werden die Netzwerkpfade lediglich für einen unidirektionalen Informationsaustausch verwendet. Eine bidirektionale Verwendung ist ebenfalls denkbar, entspricht jedoch nicht den Vorgaben von SCTP.
In einer vorzugsweisen Ausgestaltung ist das erste Protokoll MPLS. Den detaillierten Aufbau des Protokolls findet man in [RFC 3031]. Weiterhin wird dieses Protokoll in Grundsätzen weiter unten beschrieben. Grundsätzlich werden Netzwerkprotokolle durch einzelne Schichten bzw. Layer abgebildet. Das MPLS-Protokoll ist hierbei im Layer 2 angeordnet. Auf diesem Protokoll ist normalerweise ein IP-Protokoll in Layer 3 vorgesehen, um die Eindeutigkeit der Empfänger- und der Sender-Entity des Informationspaketes sicherzustellen. Auf diesem Layer 3 wird TCP bzw. alternativ SCTP als Transportprotokoll in Layer 4 eingesetzt. Diese beiden Protokolle stellen sicher, dass das Informationspakete auch tatsächlich angekommen ist, indem ein neues Paket gesandt wird, wenn nicht die Bestätigung des Empfanges in einem vorgeschriebenen Zeitfenster beim Sender eintrifft. Durch die vorliegende Erfindung kann auf den Layer 3 und somit seinen Overhead verzichtet werden.
In einem MPLS Netzen werden so genannte "Forwarding Equivalence Classes" (FECs) verwendet. Diese Klassen dienen dazu, bestimmte IP-Adressen auf ein Label abzubilden. Besteht hingegen eine bijektive Relation zwischen der IP-Adresse und der Äquivalenzklasse, so kann das Label dazu verwendet werden, die Aufgabe des dritten Layers zu übernehmen. Das heißt, es wird lediglich ein Label für die Sender- und Empfangs-IP-Adresse verwendet. Hierdurch steht jede FEC für ein eindeutiges Ziel- und ein eindeutiges Quell-Entity. Normalerweise wird in durch SCTP eine Reihe von IP-Adressen ausgetauscht, die als Ziel- bzw. Quell-Adressen verwaltet werden und über die der Austausch von Informationen erfolgt. Ein Entity weist somit mehrere IP-Adressen auf. Man spricht von einem Multi-homed-Entity. Details über das SCTP finden sich in RFC 2960 bzw. weiter unten. Ein Entity ist in der Regel ein Server oder ein bekannte Computer. Es ist jedoch auch vorstellbar, dass es sich um andere Netzwerkkomponenten, wie z. B. Router handelt.
Das Transportprotokoll des erfindungsgemäßen Verfahren ist SCTP, wobei die IP-Adressen durch die Labels der Netzwerkpfade ersetzt werden. In einer weiteren Ausgestaltungsform werden spezielle Pfad-Id-Labels eingeführt, die im Stack der Informationspakete angeordnet sind und die eine eindeutige Zuordnung der Information zu den einzelnen Quell- und Ziel-Entities erlauben. Hierdurch muss der gewählte Pfad, im Gegensatz zu der oben genannten Alternative, nicht eindeutig sein. Die Verwendung eines Pfad-Id-Labels stellt sicher, dass auf IP-Adressen verzichtet werden kann, weil der Empfänger an Hand des Pfad-IP-Labels erkennen kann, von wem die Information stammt.
Das Transportprotokoll hat grundsätzlich die Aufgabe sicherzustellen, dass die Informationen ankommen und ihre Reihenfolge erhalten bleibt. Hierzu werden die bekannten Methoden des SCTP verwendet, die auch aus TCP bekannt sind. Die einzelnen Pakete, die auseinander gerissene Informationen enthalten, erhalten eine Nummerierung. Anhand dieser Nummerierung kann die Reihenfolge der Zusammensetzung festgestellt werden. Die TSN (Transmission Sequence Number) wird jedem Informationspaket zugeordnet. Jede Antwort der Empfänger- bzw. des Ziel-Entities enthält die TSN, die vorher vom Sender-bzw. Quell-Entity übermittelt wurde. Hierdurch kann festgestellt werden, ob Pakete tatsächlich angekommen sind, oder verloren gegangen sind. Sollte eine Antwort nicht innerhalb der RTT (Round-Trip Time) eingetroffen sein, so wird das Paket erneut versandt. Die RTO (Retransmission Time-Out) legt das Zeitintervall fest, an dessen Ende eine neue Übertragung des Paketes erfolgt.

Bevor die Netzwerkpfade zum Austausch von Informationen dienen können, müssen sie aufgebaut werden. Hierzu werden bekannte Verfahren zum Traffic-Engineering angewandt, die vorzugsweise mit IP Adressen arbeiten, wobei die Router/Switches so konfiguriert werden, dass für einen Pfad die Ziel- und Quell-Entities eindeutig sind. Mögliche Verfahren sind in den in der Beschreibungseinleitung genannten Dokumenten beschrieben.

In einer weiteren Ausgestaltungsform wird bei der Übertragung Label-Stacking verwendet. Jedem Datenpaket wird ein Stack zugeordnet, in dem Labels verwaltet werden. Jedes Label steht für eine Äquivalenzklasse, wie sie oben bereits beschrieben wurde. Kommt ein Datenpaket mit einem Label an einem Router an, so wird das oberste Label vom Stack herunter genommen und durch ein neues Label ersetzt, dass dieser Äquivalenzklasse auf dem aktuellen Router entspricht. Anhand des Anfangslabels und des Endlabels kann somit der Weg bzw. der Pfad des Paketes mit seiner Information vorgezeichnet werden.
SCTP wählt in Abhängigkeit des Durchsatzes oder der Antwortzeit unterschiedliche Netzwerkpfade bei der Übertragung von Informationen. Somit wird ein konstant hoher Durchsatz sichergestellt.
Ein weiterer Bestandteil der Erfindung ist eine Vorrichtung zum Austausch von Informationen über ein Netzwerk, die Mittel aufweist, um das erfindungsgemäße Verfahren durchzuführen. Hierbei handelt es sich vorzugsweise um Endgeräte in Form von Computern, die eine Netzwerkschnittstelle aufweisen. Weiterhin handelt es sich hierbei um Router, die am Anfang eines Pfades liegen. Diese müssen in der Lage sein, die Labels den entsprechenden Endgeräten zuzuordnen.
Die Figuren zeigen eine mögliche Ausgestaltungsform der vorliegenden Erfindung: Es zeigt
- Figur 1: ein Netzwerk mit Routern, die Label-Stacking verwenden, wobei jeder Router das Label des vorhergehenden Routers austauscht und durch sein eigenes Label ersetzt, wobei zusätzlich ein Pfad-Id-Label verwendet wird, das im Stack angeordnet ist, um die Eindeutigkeit sicherzustellen;
- Figur 2: ein Netzwerk mit Routern, die Label-Stacking verwenden, wobei jeder Router das Label des vorhergehenden Routers austauscht und durch sein eigenes Label ersetzt, wobei die Label einen eindeutigen Pfad beschreiben;
- Figur 3: ein Netzwerk, das den Stand der Technik wiedergibt, wobei die IP-Adresse im Datenpaket angeordnet ist.

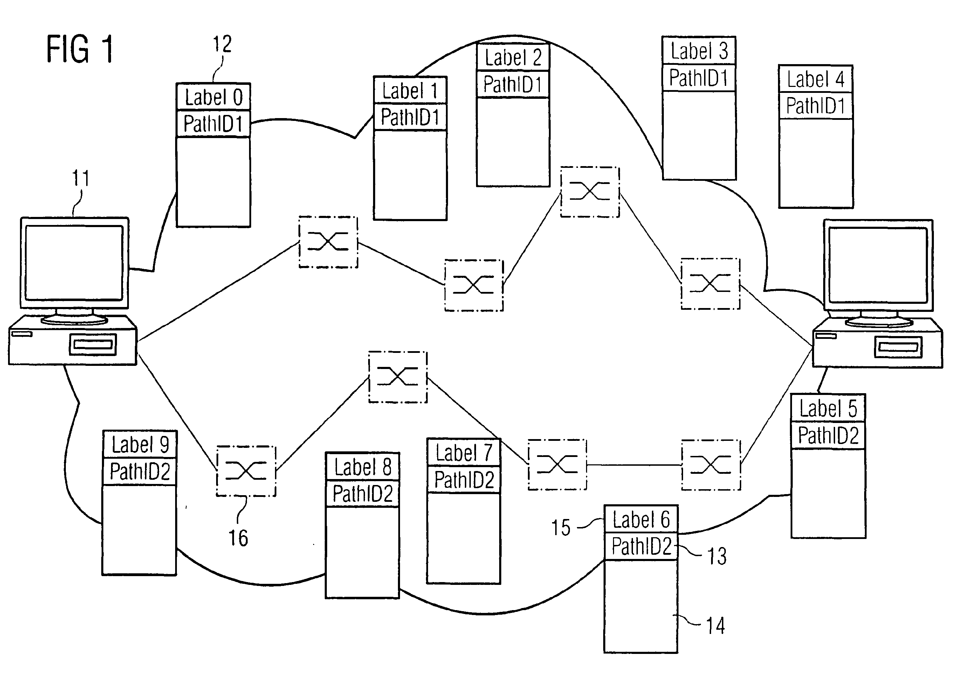

Figur 1 zeigt ein MPLS Netzwerk mit zwei Entities 11. Diese sind durch zwei Pfade miteinander verbunden. Die Datenpakete 12 werden über Router 16 durch das Netzwerk geleitet, um beim entsprechenden Ziel-Entity 11 anzukommen. Die Pfade werden durch das Pfad-Id-Label 13 gekennzeichnet. Der erste Pfad weist das Pfad-Id-Label "pathID1" auf. Der zweite Pfad wird durch das Pfad-Id-Label "pathID2" gekennzeichnet. Jedes Datenpaket 12 weist einen Stack auf, in dem sich die Label befinden. Durch das oberste Label 15 wird die FEC bestimmt. Bei der ersten Übertragung wurde dem Datenpaket das Label mit der Nummer 0 zugeordnet. Der erste Router tauscht dieses Label gegen das Label 1 aus. Der letzte Router in diesem Pfad tauscht das Label gegen das Label mit der Nummer 4 aus. Bei der Antwort wird der zweite Pfad verwendet. Hierbei wird ebenfalls der Stack der Datenpakete mit entsprechenden Labels versehen, die durch jeden Router ersetzt werden. Das Label, das den Pfad bestimmt, wird nie ausgetauscht, damit der Empfänger eindeutig feststellen kann, von wem das Paket gesandt wurde.

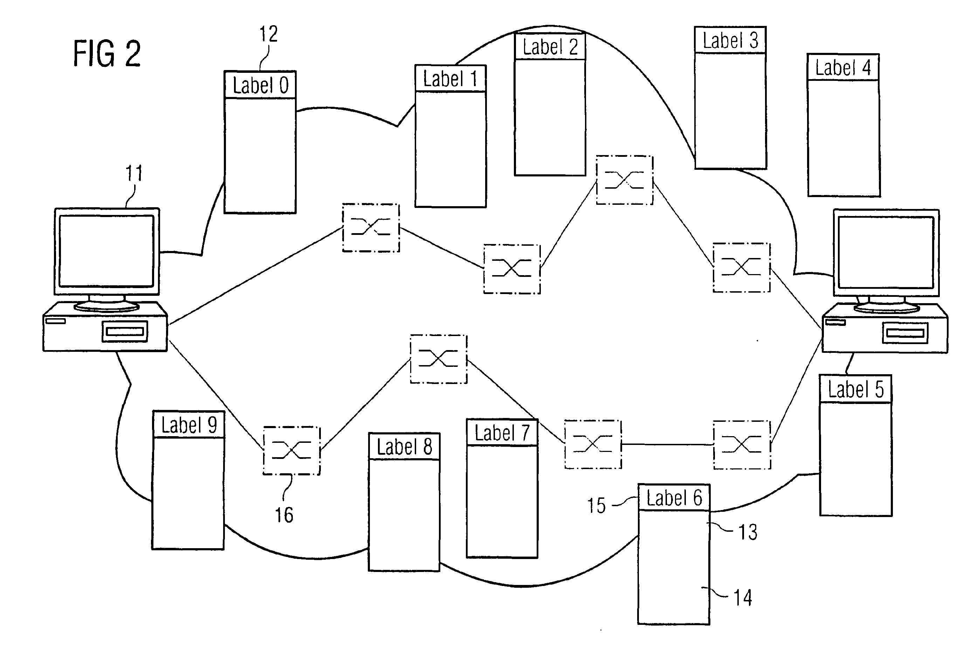

Figur 2 zeigt eine Ausführungsform ohne das Pfad-ID-Label. Hierbei ist jedoch Voraussetzung, das jedes Label einem eindeutigen Pfad zugeordnet ist. Ein Pfad ist immer dann eindeutig, wenn Quell- und Ziel-Entity eindeutig sind.

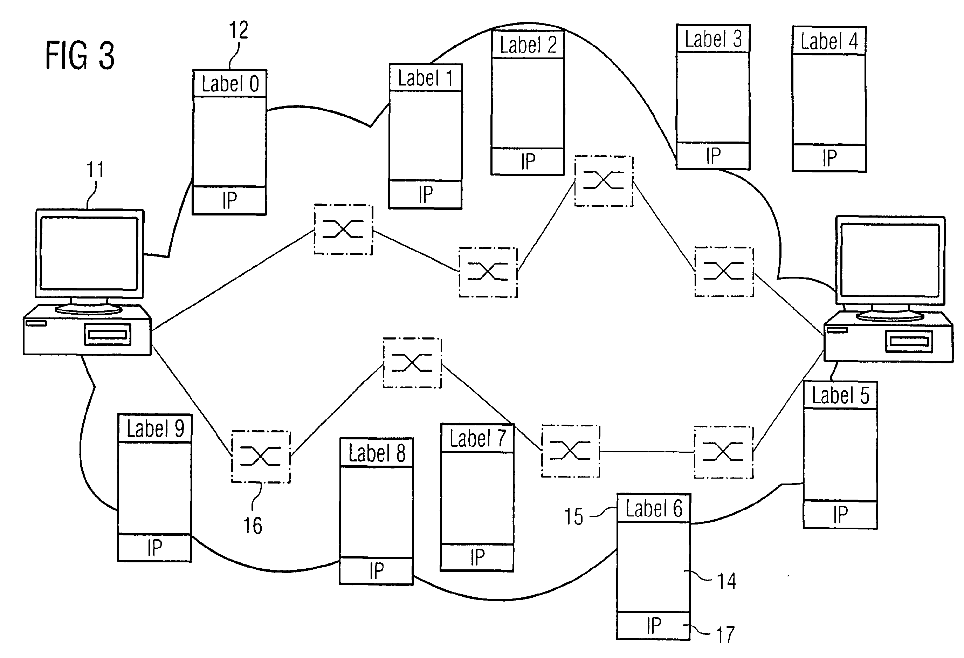

Die Figur 3 zeigt den Stand der Technik, bei dem die IP-Adresse in der zu transportierenden Information 14 angeordnet ist. Sollten wie gewöhnlich die Labels nicht eindeutig sein, sondern lediglich Äquivalenzklassen bestimmen, so kann es notwendig sein, dass für eine Routing-Entscheidung die IP-Adresse in der zu transportierenden Information analysiert wird. Diese Analyse kann sehr aufwendig sein und benötigt zusätzliche Logik in den Router.

Im Folgenden wird detailliert auf die einzelnen Protokolle und ihre Abwandlung eingegangen.
Bei MPLS Netzen wandert ein Paket von einem Router zum nächsten. Jeder Router trifft eine unabhängige Entscheidung hinsichtlich des Weiterleitens. Das heißt, jeder Router analysiert den Header des Paketes, und jeder Router durchläuft ein Programm mit dem Router-Algorithmus. Jeder Router wählt eine neue Route in Abhängigkeit des Ergebnisses des Router-Algorithmus. Die Auswahl der nächsten Route erfolgt somit in zwei Schritten. Der erste Schritt partitioniert die gesamte Mengen der möglichen Pakete in eine Menge von äquivalenten Klassen (FEC). Der zweite Schritt bildet jede FEC auf eine Route ab. Was die Entscheidung der Weiterleitung angeht, wird keine Unterscheidung zwischen den Paketen gemacht, die der gleichen FEC angehören. Unterschiedliche Pakete, die der gleichen FEC angehören, können nicht unterschieden werden. Als unterschiedliche Pakete betrachtet man die Pakete, die eine unterschiedliche Ziel- oder Ursprungsadresse aufweisen. Um jedoch MPLS für die vorliegende Erfindung verwenden zu können, muss ein Pfad und somit die Äquivalenzklasse eindeutig sein. Das heißt, eine Äquivalenzklasse steht für ein eindeutiges Quell- und Ziel-Entity bzw. seine Adressen. In einem MPLS-Netz erfolgt die Zuordnung zu einer FEC nur einmal, nämlich dann, wenn das Paket in das Netzwerk eintritt. Die FEC, der ein Paket zugeordnet ist, ist als kurzer Wert codiert, der als Label bezeichnet wird. Wenn ein Paket zur nächsten Route gesendet wird, so wird das Label mitgesandt. Bei den folgenden Routern wird keinerlei Analyse der weiteren Inhalte des Paketes vorgenommen. Es wird lediglich das Label überprüft. Das Label wird als Index für eine Tabelle verwendet, aus der die nächste Route und das nächste Label entnommen werdenkönnen. Das alte Label wird durch das neue Label ersetzt und das Paket wird weitergeleitet in die nächste Route. In einem MPLS Netz wird das Weiterleiten nur durch die Labels gesteuert. Dies hat eine Reihe von Vorteilen. So müssen die Router nur geringe Fähigkeiten haben. Sie müssen lediglich in der Lage sein, das Label zu analysieren und in einer Tabelle zu überprüfen, welche Route diesem Label zugeordnet ist, um das alte Label durch ein neues Label zu ersetzen. Weiterhin kann durch diese einfachen Aufgaben ein hoher Durchsatz realisiert werden. Weitere Vorteile können der RFC 3031 entnommen werden.

Im Folgenden werden einige Grundsätze definiert. Ein Label ist ein kurzer, örtlich signifikanter Bezeichner, der eine feste Länge aufweist, um eine FEC zu identifizieren. Das Label dient zur Repräsentation einer FEC, der das Paket zugeordnet ist. In der grundsätzlichen Verwendung der FEC wird diese auf der Grundlage der Zieladressen des Netzwerk-Layers zugeordnet. Es handelt sich jedoch in der ursprünglichen Verwendung der FEC nicht um eine Kodierung der Netzwerkadresse. Genau an diesem Punkt macht die vorliegende Erfindung einen Unterschied. Durch die eindeutige Zuordnung des Labels zu einem eindeutigen Pfad handelt es sich um eine Kodierung einer Netzwerkadresse.

Um sicherzustellen, dass die Router die Pakete denselben Äquivalenzklassen zuordnen, müssen die Router regelmäßig Informationen austauschen, aus denen ersichtlich ist, welche Pakete einem Label zugeordnet werden. Weiterhin ist es wichtig, dass nicht dieselben Labels von unterschiedlichen Routern verwandt werden, soweit hierdurch eine eindeutige Identifikation des vorhergehenden Routers unmöglich wird. Weiterhin ist darauf hinzuweisen, dass Up-Streams und Down-Streams unterschiedlich behandelt werden. So weisen diese nicht unbedingt dieselben Labels auf. In der MPLS-Architektur wird die Entscheidung, ein bestimmtes Label an eine bestimmte Äquivalenzklasse zu binden, durch den Router vorgenommen, der Down-Stream in Bezug zu dieser Bindung ist. Der Router, der Down-Stream ist, informiert dann den Router, der Up-Stream ist, von dieser Bindung. Diese Information kann z. B. als Huckepackinformation auf andere Pakete übertragen werden.

In einer weiteren Ausgestaltung unterstützt MPLS eine Hierarchie, wobei das Bearbeiten der mit Labeln versehenen Pakete vollständig unabhängig von dem Level der Hierarchie ist. Ein Paket, das keinen Label aufweist, kann als Paket betrachtet werden, dessen Stack leer ist. Die Verwendung des Stacks wird deutlich, wenn man vom Tunneln der Pakete spricht. Ein solches Tunneln kann dem Dokument RFC 3031 entnommen werden. Pakete werden immer dann getunnelt, wenn sie durch einen Netzwerkpfad geführt werden, der zwischen zwei Routern liegt, wobei dieser Netzwerkpfad wiederum eine Reihe von Routern umfasst. Wurde z. B. ein expliziter Pfad vorgegeben, der die Router R1 bis R4 umfasst, und liegt zwischen dem Router R1 und R2 ein Pfad, der die Router R1.1, R1.2, R1.3 umfasst, so wird ein weiteres Label durch den Router R1 auf den Stack gepusht. Die Router R1.1, R1.2, R1.3 arbeiten nun auf diesem neuen zweiten Element. Sobald das Paket bei Router R2 ankommt, wird das oberste Element vom Stack gepoppt. Problematisch wird es, wenn kein Label auf dem Stack ist. Bei der normalen MPLS-Architektur wird die Netzwerkadresse (im Normalfall die IP-Adresse) analysiert, um eine Äquivalenzklasse zu bestimmen. Bei der Verwendung der vorliegenden Erfindung darf diese Situation nicht auftreten. MPLS bietet zwei Arten der Routenauswahl. Die eine Routenauswahl legt die Route bereits am Startpunkt fest. Es werden die einzelnen Router bestimmt, die durchlaufen werden müssen. Es handelt sich hierbei um ein explizites Routen. Beim hop-by -hop-Routen werden die Router nicht explizit festgelegt, sodass jeder Router anhand seiner Tabellen festlegen kann, welches der nachfolgende Router sein soll. Die vorliegende Erfindung kann mit beiden Möglichkeiten der Routenauswahl betrieben werden.

SCTP ist ein zuverlässiges Transportprotokoll, das ursprünglich auf Paketnetzwerken wie IP aufbaut. In der vorliegenden Ausführungsform wird jedoch gerade IP nicht genutzt. Hierdurch kann der Layer 3 des Netzwerkschemas eingespart werden.
Die Vorteile von SCTP sind wie folgt:
1. bestätigte fehlerfreie Übertragung von Benutzerdaten ohne Möglichkeiten
2. Datenfragmentation im Rahmen von MTU (Maximum Transmission Unit. Eine MTU bezeichnet in einem paket-basierten Netzwerk (z. B. TCP/IP) die Größe des Pakets, welches gerade noch übertragen werden kann. TCP/IP benutzt die MTU zur Bestimmung der Größe eines Pakets bei jeder Übertragung. Tritt ein zu großes Paket auf - eines, das der Router nicht mehr transferieren kann - wird es zum entsprechenden Rechner zurückgesandt.)
3. Datenübertragung über mehrere Pfade, wobei diese Daten Sequenznummern aufweisen, um einer Übertragung von Informationen vorzubeugen, die nicht der ursprünglichen Reihenfolge entspricht.
4. Hohe Fehlertoleranz durch die Unterstützung von multihomed Entities an beiden Enden der Assoziation.

In der ursprünglichen Ausführungsform wurde SCTP als Layer zwischen der Benutzeranwendung und dem verbindungslosen Paketnetzwerk wie IP betrachtet. In der vorliegenden Form wird jedoch das IP Netzwerk überflüssig. Die Vorteile hiervon wurden bereits oben beschrieben. SCTP ist in seiner Natur eine verbindungsorientierte Assoziation zwischen zwei Entities, jedoch von seinem Konzept her ist es breiter als TCP angelegt.

Eine Assoziation wird durch eine Anfrage von einem SCTP Nutzer initiiert. Ein Cookie Mechanismus, ähnlich zu dem in RFC 2522 beschriebenen, wird während der Initialisierung der Assoziation verwendet, um Schutz gegen Sicherheitsangriffe zu gewährleisten. Weiterhin wird eine Beendigung der Verbindung vorgenommen, soweit diese vom Nutzer gewollt ist. Somit ist ein halb offener Zustand, wie er aus TCP bekannt ist, ausgeschlossen. Wenn die Verbindung geschlossen wurde, werden keinerlei neue Daten akzeptiert.
Die Anzahl der Datenströme in SCTP wird zum Zeitpunkt der Initialisierung der Verbindung festgelegt. Die Anzahl wird durch die beiden Entities festgelegt. Informationen, die über diese Ströme ausgetauscht werden, weisen entsprechende Nummern auf. Intern weist SCTP jeder Information bzw. jedem Informationspaket eine eindeutige Stromsequenznummer zu. Durch die Verwendung von unterschiedlichen Strömen wird sichergestellt, dass die Informationen auch dann übertragen werden, wenn einer der Ströme blockiert ist. Bei der vorliegenden Erfindung entsprechen die Ströme den einzelnen Netzwerkpfaden, die durch Labels gekennzeichnet sind.
Eine TSN (Transmission Sequence Number) wird jedem Datenpaket zugeordnet. Die TSN ist unabhängig von jeder Stromsequenznummer. Der Empfänger bzw. die Ziel-Entity bestätigt den Empfang eines Pakets durch Rücksendung der TSN. Hierdurch wird sichergestellt, dass alle Pakete ankommen.
Falls ein Paket untergegangen sein sollte, so wird dieses erneut gesandt. Weiterhin wird durch einen Timer festgelegt, ob das Paket erneut gesandt werden soll. Sollten die Antwortzeiten nicht eingehalten worden sein, so wird der Timer hoch gesetzt und das Paket erneut gesandt. Der Timer wird bis zu einer oberen Grenze solange hoch gesetzt, bis eine Antwort auf das Paket erhalten wird.
Durch ein Überprüfungsfeld wird die Konsistenz des Paketes überprüft.
Im Folgenden wird ein Verbindungsaufbau beschrieben und ein Hinweis darauf gemacht, wodurch sich das bekannte SCTP vom modifizierten erfindungsgemäßen Protokoll unterscheidet.
Bevor eine erste Datenübertragung zwischen zwei SCTP-Entities (A und Z) erfolgen kann, muss ein vollständiger Initialisierungsprozess durchgeführt werden, bei dem eine SCTP-Assoziation erzeugt wird.
Nach dem eine Assoziation aufgebaut wurde, können unidirektionale Datenströme über die Pfade übertragen werden. Der Initialisierungsprozess besteht aus den folgenden Schritten. Entity A sendet zuerst eine Initialisierungspaket zum Entity Z. Dieses Initialisierungspaket enthält einen Überprüfungs-Tag in einem entsprechenden Feld (Tag_A). Der Tag ist eine entsprechende Zufallszahl. Nach dem dieses Initialisierungspaket übersandt wurde, wird ein Timer gestartet. Das Entity A wird in einem Cookie-Wartezustand versetzt. Entity Z hat hierauf sofort mit einem Initialisierungsantwortpaket zu antworten. Statt der IP-Adressen werden nun Labels bzw. Pfad-ID-Labels ausgetauscht. Pfad-ID-Labels werden immer dann ausgetauscht, wenn der durch das Label beschriebene Pfad nicht eindeutig ist. Ein Pfad ist immer dann nicht eindeutig, wenn beim letzten Router die Ziel-Entity nicht eindeutig zu bestimmen ist. Dies ist immer dann der Fall, wenn die Äquivalenzklasse des letzten Labels nicht eindeutig, das heißt bijektiv, ist. Entity Z muss nun das Überprüfungsfeld Tag_A und Tag_Z sowie einen Cookie als Bestätigung senden. Nach dem Erhalt dieser Bestätigung wird der Timer von Entity A gestoppt. Ebenfalls ändert sich der Zustand. Es wird daraufhin eine Cookie-Antwort an Entity Z gesandt, die mitteilt, dass der Cookie erhalten wurde. Daraufhin wird erneut ein Timer von Entity A gestartet. Dieser Timer wird angehalten, nachdem Entity Z den Erhalt der Cookie-Antwort bestätigt hat. Ein Abbruch der Verbindung muss dem entsprechenden Entity immer mitgeteilt werden. Nachdem die Verbindung bzw. die Assoziation so aufgebaut wurde, werden über die Pfade die Daten ausgetauscht. Zur Überwachung der Verbindungen werden regelmäßig Testinformationen übertragen. Hierdurch kann der Zustand der Verbindung bestimmt werden.
Weitere Details sind dem RFC 2960 zu entnehmen.

## Patentansprüche

1. Verfahren zur Übertragung von Informationen (14) über ein Netzwerk zwischen zwei Entities (11),
mit einem ersten Protokoll, das MPLS ist und das zur Übertragung von Informationen (14) zwischen den Entities (11) Netzwerkpfade verwendet, die durch Labels, die jeweils zur Repräsentation einer FEC, Forward Equivalence Class, in MPLS dienen, **gekennzeichnet** sind, wobei ein Ziel-Entity (11) und ein Quell-Entity (11) der Netzwerkpfade mit einem Label eindeutig bestimmt sind und das Label eindeutig einem Netzwerkpfad zugeordnet ist,
mit einem zweiten Transportprotokoll, das auf dem ersten Protokoll aufbaut, wobei das Transportprotokoll den Empfang einer Information (14) durch eine Bestätigungsinformation sicherstellt,
mit einem ersten Init-Schritt, bei dem über einen ersten Netzwerkpfad 1 bis n Labels von Netzwerkpfaden ausgetauscht werden, die einen Informationsaustausch zwischen den Entities (11) erlauben,
mit einem zweiten Informationsaustausch-Schritt, bei dem die Informationen (14) über die 1 bis n Netzwerkpfade ausgetauscht werden.

2. Verfahren nach einem oder mehreren der vorhergehenden Ansprüche, wobei das zweite Transportprotokoll ein SCTP ist, wobei die IP-Adressen durch die Labels (13) der Netzwerkpfade ersetzt werden.

3. Verfahren zur Übertragung von Informationen über ein Netzwerk zwischen zwei Entities (11),
mit einem ersten Protokoll, das MPLS ist und das zur Übertragung von Informationen (14) zwischen den Entities (11) Netzwerkpfade verwendet, die durch Labels (13), die jeweils zur Repräsentation einer FEC, Forward Equivalence Class, in MPLS dienen, **gekennzeichnet** sind, wobei ein Ziel-Entity (11) und ein Quell-Entity (11) durch einen weiteren Pfad-ID-Label (13) eindeutig bestimmt ist und das Pfad-ID-Label (13) eindeutig einem Netzwerkpfad zugeordnet ist,
mit einem zweiten Transportprotokoll, das auf dem ersten Protokoll aufbaut, wobei das Transportprotokoll den Empfang einer Information (14) durch eine Bestätigungsinformation sicherstellt,
mit einem ersten Init-Schritt, bei dem über einen ersten Netzwerkpfad 1 bis n Labels von Netzwerkpfaden ausgetauscht werden, die einen Informationsaustausch zwischen den Entities (11) erlauben, wobei das Pfad-ID-Label (13) nie ausgetauscht wird,
mit einem zweiten Informationsaustausch-Schritt, bei dem die Informationen (14) über die 1 bis n Netzwerkpfade ausgetauscht werden.

4. Verfahren nach Anspruch 3, wobei das zweite Transportprotokoll ein SCTP ist, wobei die IP-Adressen durch die Pfad-ID-Labels (13) der Netzwerkpfade ersetzt werden.

5. Verfahren nach einem oder mehreren der vorhergehenden Ansprüche, wobei zur Sicherstellung der Übertragung von Informationen Methoden des SCTP verwendet werden, insbesondere Nummerierung der Teilinformationen, TSN, RTO und/oder RTT.

6. Verfahren nach einem oder mehreren der vorhergehenden Ansprüche, wobei vor dem Aufbau der Kommunikation zwischen den Entities (11) die Netzwerkpfade initialisiert werden, wobei Verfahren zum Traffic-Engineering angewandt werden, die vorzugsweise mit IP Adressen arbeiten und bei denen die Router/Switches so konfiguriert werden, dass für einen Pfad die Ziel- und Quell-Entities (11) eindeutig bestimmt sind.

7. Verfahren nach einem oder mehreren der vorhergehenden Ansprüche, wobei in Abhängigkeit des Durchsatzes und/oder der Antwortzeit unterschiedliche Netzwerkpfade bei der Übertragung von Informationen (14) verwendet werden.

8. Verfahren nach einem oder mehreren der vorhergehenden Ansprüche, wobei im MPLS-Protokoll Label-Stacking verwendet wird.

9. Verfahren nach einem oder mehreren der vorhergehenden Ansprüche, wobei die Netzwerkpfade lediglich für einen u-nidirektionalen Informationsaustausch verwendet werden.

10. Vorrichtung zum Austausch von Informationen über ein Netzwerk,
**dadurch gekennzeichnet, dass**
die Vorrichtung Mittel aufweist, um ein Verfahren nach einem oder mehreren der vorhergehenden Ansprüche zu realisieren.

## Claims

1. Method for transmitting information (14) via a network between two entities (11),
with a first protocol which is MPLS and which, for the transmission of information (14) between the entities (11), uses network paths which are identified by labels which are in each case used for representing an FEC, forward equivalence class, in MPLS, a destination entity (11) and a source entity (11) of the network paths being unambiguously determined with a label and the label being unambiguously allocated to a network path,
with a second transport protocol which builds on the first protocol, the transport protocol ensuring the reception of information by means of a confirmation information item,
with a first init step in which 1 to n labels are exchanged by network paths which allow an exchange of information between the entities (11), via a first network path,
with a second step of information exchange in which the information (14) is exchanged via the 1 to n network paths.

2. Method according to one or more of the preceding claims, with the second transport protocol being an SCTP, the IP addresses being replaced by the labels (13) of the network paths.

3. Method for transmitting information via a network between two entities (11),
with a first protocol which is MPLS and which, for the transmission of information (14) between the entities (11), uses network paths which are identified by labels (13) which are in each case used for representing an FEC, forward equivalence class, in MPLS, a destination entity (11) and a source entity (11) being unambiguously determined by a further path ID label (13) and the path ID label (13) being unambiguously allocated to a network path,
with a second transport protocol which builds on the first protocol, the transport protocol ensuring the reception of information by means of a confirmation information item,
with a first init step in which 1 to n labels of network paths allowing an exchange of information between the entities (11) are exchanged via a first network path, the path ID label (13) never being exchanged,
with a second step of information exchange in which the information (14) is exchanged via the 1 to n network paths.

4. Method according to Claim 3, with the second transport protocol being an SCTP, the IP addresses being replaced by the path ID labels (13) of the network paths.

5. Method according to one or more of the preceding claims, with methods of SCTP being used to ensure the transmission of information, in particular numbering of the part-information, TSN, RTO and/or RTT.

6. Method according to one or more of the preceding claims, with before the communication between entities (11) is set up, the network paths being initialized, using methods for traffic engineering which preferably operate with IP addresses and in which the routers/switches are configured in such a manner that the destination and source entities (11) are unambiguously determined for a path.

7. Method according to one or more of the preceding claims, with different network paths being used during the transmission of information (14), depending on the throughput and/or the response time.

8. Method according to one or more of the preceding claims, with label stacking being used in the MPLS protocol.

9. Method according to one or more of the preceding claims, with the network paths only being used for unidirectional information exchange.

10. Device for interacting information via a network, **characterized in that** the device has means for implementing a method according to one or more of the preceding claims.

## Revendications

1. Procédé pour la transmission d'informations (14) au moyen d'un réseau entre deux entités (11), avec un premier protocole, qui est MPLS et qui utilise pour la transmission d'informations (14) entre les entités (11) des chemins de réseau qui sont **caractérisés par** des labels, lesquels servent chacun à la représentation d'une FEC (Forward Equivalence Class) dans des MPLS, une entité cible (11) et une entité source (11) des chemins de réseau étant définies clairement avec un label et le label étant attribué clairement à un chemin de réseau,
avec un second protocole de transport qui est basé sur le premier protocole, le protocole de transport garantissant la réception d'une information (14) par une information de confirmation,
avec une première étape Init, lors de laquelle 1 à n labels de chemin de réseau sont échangés au moyen d'un premier chemin de réseau 1, lesquels permettent un échange d'information entre les entités (11),
avec une seconde étape d'échange d'information, lors de laquelle les informations (14) sont échangées au moyen des 1 à n chemins de réseau.

2. Procédé selon l'une quelconque ou plusieurs des revendications précédentes, le second protocole de transport étant un SCTP, les adresses IP étant remplacées par les labels (13) des chemins de réseau.

3. Procédé pour la transmission d'informations au moyen d'un réseau entre deux entités (11),
avec un premier protocole, qui est MPLS et qui utilise pour la transmission d'informations (14) entre les entités (11) des chemins de réseau qui sont **caractérisés par** des labels (13), qui servent chacun à la représentation d'une FEC (Forward Equivalence Class) dans des MPLS, une entité cible (11) et une entité source (11) étant déterminées clairement par un autre label ID de chemin (13) et le label ID de chemin (13) étant attribué clairement à un chemin de réseau,
avec un second protocole de transport, qui est basé sur le premier protocole, le protocole de transport garantissant la réception d'une information (14) par une information de confirmation,
avec une première étape Init, lors de laquelle 1 à n labels de chemins de réseau sont échangés au moyen d'un premier chemin de réseau, lesquels permettent un échange d'information entre les entités (11), le label ID de chemin (13) n'étant jamais échangé,
avec une seconde étape d'échange d'information, lors de laquelle les informations (14) sont échangées au moyen des 1 à n chemins du réseau.

4. Procédé selon la revendication 3, le second protocole de transport étant un SCTP, les adresses IP étant remplacées par les labels ID de chemin (13) des chemins de réseau.

5. Procédé selon l'une quelconque ou plusieurs des revendications précédentes, des méthodes du SCTP étant utilisées pour garantir la transmission d'informations, en particulier la numérotation des informations partielles, TSN, RTO et/ou RTT.

6. Procédé selon l'une quelconque ou plusieurs des revendications précédentes, les chemins de réseau étant initialisés avant l'établissement de la communication entre les entités (11), des procédés étant appliqués pour le Traffic-Engineering, lesquels travaillent de préférence avec des adresses IP et avec lesquels les routeurs/switchs sont configurés de telle sorte que les entités cible et source (11) sont clairement définies pour un chemin.

7. Procédé selon l'une quelconque ou plusieurs des revendications précédentes, différents chemins du réseau étant utilisés en fonction du débit et/ou du temps de réponse lors de la transmission d'informations (14).

8. Procédé selon l'une quelconque ou plusieurs des revendications précédentes, le Label-Stacking étant utilisé dans le protocole MPLS.

9. Procédé selon l'une quelconque ou plusieurs des revendications précédentes, les chemins du réseau étant utilisés seulement pour un échange d'information unidirectionnel.

10. Dispositif pour l'échange d'informations par un réseau,
**caractérisé en ce que** le dispositif présente des moyens pour réaliser un procédé selon l'une quelconque ou plusieurs des revendications précédentes.
